# EUROPÄISCHE PATENTSCHRIFT

(11) **EP 2 181 131 B1**
(45) Veröffentlichungstag und Bekanntmachung des Hinweises auf die Patenterteilung: **27.10.2010**
(21) Anmeldenummer: 08787094.5
(22) Anmeldetag: 11.08.2008
(51) Int. Cl.: C08F 293/00, C08F 297/02, C09D 153/00, C09J 153/00

(54) **VERFAHREN ZUR HERSTELLUNG VON PENTABLOCKCOPOLYMEREN MIT OH-FUNKTIONALISIERTEN BLÖCKEN AUF (METH)ACRYLATBASIS**
METHOD FOR PREPARATION OF PENTA-BLOCK COPOLYMERS WITH OH-FUNCTIONALIZED BLOCKS BASED ON (METH)ACRYLATE
PROCÉDÉ DE PRODUCTION DE COPOLYMÈRES PENTASÉQUENCÉS FONCTIONNALISÉS OH À BASE DE (MÉTH)ACRYLATE

(30) Priorität: 21.08.2007 DE 102007039535
(43) Veröffentlichungstag der Anmeldung: 05.05.2010
(73) Patentinhaber: Evonik Röhm GmbH, 64293 Darmstadt (DE); Henkel AG & Co. KGaA, 40191 Düsseldorf (DE)
(72) Erfinder: BALK, Sven, 60594 Frankfurt (DE); LÖHDEN, Gerd, 45136 Essen (DE); KAUTZ, Holger, 45721 Haltern am See / Sythen (DE); ERB, Volker, 40505 Düsseldorf (DE); FRANKEN, Uwe, 41542 Dormagen (DE); KINZELMANN, Georg, 50259 Pulheim (DE); MÖLLER, Thomas, 40593 Düsseldorf (DE)
(86) Internationale Anmeldenummer: PCT/EP2008/060520
(87) Internationale Veröffentlichungsnummer: WO 2009/024495

(56) Entgegenhaltungen:
- EP-A- 1 475 397
- WO-A-2006/106214
- XU F J ET AL: "Pentablock copolymers of poly(ethylene glycol), poly((2-dimethyl amino)ethyl methacrylate) and poly(2-hydroxyethyl methacrylate) from consecutive atom transfer radical polymerizations for non-viral gene delivery" 1. Juli 2008 (2008-07-01), BIOMATERIALS, ELSEVIER SCIENCE PUBLISHERS BV., BARKING, GB, PAGE(S) 3023 - 3033 , XP022647944 ISSN: 0142-9612 [gefunden am 2008-04-18] das ganze Dokument

## Beschreibung

### Gebiet der Erfindung

Die Erfindung betrifft ein weiteres Verfahren zur Herstellung von CABAC- bzw. ACBCA-Pentblockcopolymeren auf (Meth)acrylatbasis mit einer OH-Funktionalisierung der A-Blöcke und deren Verwendung zum Beispiel als Formulierungsbestandteil von Reaktivschmelzklebstoffen.

Maßgeschneiderte Copolymere mit definierter Zusammensetzung, Kettenlänge, Molmassenverteilung usw. sind ein breites Forschungsfeld. Man unterscheidet unter anderem zwischen Gradienten- und Blockpolymeren. Für solche Materialien sind verschiedene Anwendungen denkbar. Im Folgenden sollen einige davon kurz vorgestellt werden. Dazu wurden unter anderem Einsatzbereiche ausgewählt, in denen Polymere eingesetzt werden, von denen die aktuelle Erfindung abzugrenzen ist.

Reaktivklebstoffe sind bei Raumtemperatur feste Substanzen. Sie werden durch Erwärmen aufgeschmolzen und auf ein Substrat aufgebracht. Beim Abkühlen verfestigt sich die Klebmasse wieder und bindet somit das Substrat. Zusätzlich vernetzen die in der Klebmasse enthaltenen Polymere durch Reaktion mit Feuchtigkeit. Durch diesen Vorgang erfolgt ein endgültiges, irreversibles Aushärten.

### Stand der Technik

Derartige Klebstoffe sind zum Beispiel in US 5,021,507 beschrieben. Hauptbestandteil dieser Klebstoffe sind Verbindungen mit freien Isocyanatgruppen, welche meist durch Kondensationsreaktion eines Überschusses von Polyisocyanatgruppen mit Polyolen erhalten werden. Zur Verbesserung der Hafteigenschaften auf bestimmten Substraten wurden diesen Verbindungen mit freien Isocyanatgruppen Bindemittel, bestehend aus Polymeren aus ethylenisch ungesättigten Monomeren, zugegeben. Als Bindemittel werden typischerweise Polyalkyl(meth)acrylate mit C₁- bis C₂₀-Alkylgruppen verwendet. Diese werden aus den entsprechenden Monomeren entweder vor der Zugabe zu den Urethanen oder in deren Beisein durch freie, radikalische Polymerisation polymerisiert.

In US 5,866,656 sowie in EP 1 036 103 werden Reaktivschmelzklebstoffe beschrieben, bei denen die Bindemittel aus Poly(meth)acrylat kovalent an die Verbindungen mit freien Isocyanatgruppen in der Klebstoffzusammensetzung gebunden sind. Da diese Bindung meist durch eine Kondensationsreaktion erfolgt, spricht man bei solchen Klebstoffen, bei denen diese Bindung ausgebildet ist, von Klebstoffen in der Kondensationsstufe. Die so erhaltenen Klebstoffe zeichnen sich gegenüber denen in US 5,021,507 beschriebenen durch eine erhöhte Elastizität und eine verbesserte Haftung auf bestimmten Metallsubstraten sowie einer längeren offenen - zur Verarbeitung zur Verfügung stehenden - Zeit aus.

Allerdings weisen diese Reaktivschmelzklebstoffe erhebliche Nachteile auf. So zeigen sie zum Beispiel nur eine geringe Anfangsfestigkeit. Daraus resultiert eine besonders lange, nachteilige Fixierzeit nach dem Auftragen der Klebmasse.

Ein weiterer Nachteil der Reaktivklebstoffe des Standes der Technik ist die bei der Verarbeitung relevante, hohe Viskosität. Dadurch ist ein Verarbeiten des geschmolzenen Reaktivschmelzklebstoffs, vor allem das Auftragen auf poröse Substrate, deutlich erschwert. Teilweise tritt auch eine Vergelung in der Kondensationsstufe auf.

Ein weiterer Nachteil ist, dass der extrahierbare Anteil im ausgehärteten Klebstoff recht hoch ist. Dies verringert unter anderem die Beständigkeit der Klebmasse gegenüber Lösungsmitteln.

Weiterhin nachteilig ist, dass die freiradikalisch polymerisierten Materialien auch einen höheren Anteil niedermolekularer Bestandteile, die an den Vernetzungsreaktionen nicht teilnehmen und den extrahierbaren Bestandteil entsprechender Reaktivschmelzklebstoffe darstellen, enthalten.

Mit einer anderen Art der Polymerisation ist man dem Ziel maßgeschneiderter Polymere ein gutes Stück näher gekommen. Die ATRP-Methode (atom transfer radical polymerization) wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866) speziell auch mit 2-Hydroxyethyl(meth)acrylat (HEMA) (Beers et al., Macromolecules; 1999, 32, S.5772-5776). Die ATRP liefert engverteilte (Homo)Polymere im Molmassenbereich von Mₙ=10.000-120.000 g/mol. Ein besonderer Vorteil dabei ist, dass sowohl das Molekulargewicht als auch die

Molekulargewichtsverteilung regelbar sind. Als lebende Polymerisation gestattet sie ferner den gezielten Aufbau von Polymerarchitekturen wie beispielsweise statistische Copolymere oder auch Block-Copolymer-Strukturen. Durch entsprechende Initiatoren sind z.B. zusätzlich ungewöhnliche Block-Copolymere und Sternpolymere zugänglich. Theoretische Grundlagen zum Polymerisationsmechanismus sind unter anderem in Hans Georg Elias, Makromoleküle, Band 1, 6.Auflage, Weinheim 1999, S.344 erläutert.

Die oben beschriebenen Probleme wurden in WO 05/047359 insofern gelöst, dass durch Anwendung einer kontrollierten Polymerisationsmethode, in Form der atom transfer radical polymerisation (ATRP), Bindemittel mit sehr engen Molekulargewichtsverteilungen zur Verfügung gestellt werden konnten, die durch den gegenüber freiradikalisch polymerisiert (Meth)acrylaten einen nur geringen Anteil hochmolekularer Bestandteile aufweisen. Diese Bestandteile bewirken in Polymermischungen insbesondere eine Erhöhung der Viskosität.

Nachteil der nach WO 05/047359 dargestellten Reaktivklebstoffe ist jedoch eine statistische Verteilung der Hydroxy-, Mercapto-, bzw. Amingruppen in der Polymerkette des Bindemittels. Dies führt zu einer engmaschigen Vernetzung und einer somit verminderten Elastizität der Klebemasse. Daraus kann auch eine Verschlechterung der Substratbindung resultieren. Dieser Nachteil kommt insbesondere zum Tragen, wenn man Polyisocyanate mit mehr als zwei freien Isocyanatgruppen als Formulierungsbestandteil des Reaktivschmelzklebstoffs verwendet. Zur Auflistung und Beschreibung der freie Isocyanatgruppen tragenden Verbindungen sei auf die entsprechende Beschreibung in WO 05/047359 verwiesen.

Für Dispersionen mit geringer Schaumbildung werden beispielsweise in DE 102 36 133 und DE 141 60 19 durch lebende bzw. kontrollierte Polymerisation Gradientencopolymere hergestellt. Gradientencopolymere sind Copolymere, die zum Beispiel aus den Monomeren A und B bestehen, in deren Einzelketten ein Gradient der Verteilung der Monomerbausteine entlang der Ketten besteht. Das eine Kettenende ist reich an Monomer A und arm an Monomer B, das andere Ende reich an Monomer B und arm an Monomer A. Gradientencopolymere grenzen sich zu Blockcopolymeren durch den fließenden Übergang zwischen den Monomeren A und B ab.

Blockpolymere haben einen sprunghaften Übergang zwischen den Monomeren in der Polymerkette, der als Grenze zwischen den einzelnen Blöcken definiert ist. Ein übliches Syntheseverfahren für AB-Blockpolymere ist die kontrollierte Polymerisation von Monomer A und zu einem späteren Zeitpunkt die Zugabe von Monomer B. Neben der sequentiellen Polymerisation durch chargenweise Zugabe in das Reaktionsgefäß kann ein ähnliches Ergebnis auch dadurch erzielt werden, dass man bei einer kontinuierlichen Zugabe der beiden Monomere deren Zusammensetzungen zu bestimmten Zeitpunkten sprunghaft ändert. Mit einer sprunghaften Änderung können auch kurze Übergangsbereiche, in denen die zwei Wiederholungseinheiten gemischt vorliegen können, gemeint sein.

Als lebende bzw. kontrollierte Polymerisationsmethoden eignen sich neben der anionischen oder der Gruppentransfer-Polymerisation auch moderne Methoden der kontrollierten radikalischen Polymerisation wie z.B. die RAFT-Polymerisation. Der Mechanismus der RAFT-Polymerisation wird in WO 98/01478 bzw. EP 0 910 587 näher beschrieben. Anwendungsbeispiele finden sich in EP1 205 492.

In der EP 1 375 605 werden über die ATPR-Methode AB-Blockcopolymerisate hergestellt. Als polare Komponente wird HEMA eingesetzt. Damit soll eine gute Verträglichkeit mit anderen Stoffen ermöglicht werden.

Mit der WO 00/75791 werden AB-Diblockcopolymerisate aus MMA und einer Mischung aus n-BA und HEMA mit monofunktionalisierten Katalysatoren hergestellt. Die Blöcke sind Amin-funktionalisiert. Dadurch kommt es zu Verfärbungen und Beeinträchtigungen des Geruches. Ferner weisen Polymere mit einer AB-Diblockstruktur dieser Art ein für die erfindungsgemäßen Anwendungen nicht gewünschten Polaritätsunterschied zwischen den Kettenenden auf.

In EP 1475397 werden Di- und Triblockcopolymere der Form AB bzw. ABA mit zumindest einem OH-funktionalisierten Block beschrieben. In US 2004 0147674 werden entsprechende Polymere und deren Formulierung mit kristallinen Harzen beansprucht. In beiden Schriften handelt es sich um Copolymere mit einer Acrylat und einer härteren (Meth)acrylat Zusammensetzung. Die Polymere werden ebenfalls über das ATRP-Verfahren dargestellt und finden in Kleb- bzw. Dichtstoffformulierungen Anwendung. Die hier beschriebenen Triblockcopolymere haben im Vergleich zu den erfindungsgemäßen Pentablockcoplymeren der Form CABAC bzw. ACBCA jedoch den Nachteil, dass entweder das gesamte Hart- oder Weichsegment funktionalisiert ist. Bei den erfindungsgemäßen Polymeren dagegen ist nur ein kurzes Segment der Kette OHfunktionalisiert, so dass der nicht funktionalisierte Hartblock zu einer ausreichenden Kohäsion und der nicht funktionalisierte Weichblock zu einer guten Adhäsion beitragen können. Im Falle der ABA-Triblockcopolymere muss aufgrund der Funktionalisierung zumindest einer der beiden Segmente A oder B Eigenschaftsverluste einer der beiden für Kleb- bzw. Dichtstoffe wichtigen Parameter Rechnung getragen werden. Ferner kann durch Wahl geeigneter Segmentlängen die Vernetzungsdicht gut eingestellt werden. Ein weiterer Vorteil der erfindungsgemäßen Pentablockcopolymere insbesondere der Form CABAC ist, dass durch die Funktionalisierung der Zwischenblöcke A, die Hart- (A oder B) und Weichblöcke (entsprechend B oder A) im Netzwerk von einander getrennt sind und so jeweils zu einer Verbesserung der Adhäsion bzw. Kohäsion beitragen können.

### Aufgabe

Eine neue Stufe der Entwicklung sind die im Folgenden beschriebenen Pentablockcopolymere.

Aufgabe war es, Pentablockcopolymere der Struktur CABAC bzw. ACBCA darzustellen. Insbesondere besteht der Bedarf an OH-terminierten (Meth)acrylaten bzw. (Meth)acrylaten, die in Ihren Eigenschaften OH-terminierten Materialien entsprechen oder sehr nahe kommen. Dies kann zum Beispiel durch den Einbau einer bis weniger OH-Gruppen am Kettenende erreicht werden. Mit Kettenenden wird das Endsegment eines Polymers bezeichnet, das max. 1 Gew.-% - 20 Gew.-% des Gesamtgewichtes des Polymeren ausmacht.

Unabhängig davon besteht der Bedarf an polymeren Blockstrukturen, die über nicht funktionalisierte Weichsegmente mit hoher Adhäsionswirkung, nicht funktionalisierte Hartsegmente mit guter Kohäsionswirkung und OH-funktionalisierte Segmente für Folgereaktionen wie z.B. eine Vernetzungsreaktion verfügen. Solche Polymere lassen sich erfindungsgemäß durch eine sequentielle Polymerisation unter Aufbau von Pentablockstrukturen der Form ACBCA oder CABAC aufbauen.

Eine weitere Aufgabe der Erfindung ist es, reaktive Hydroxygruppen enthaltene Polymere als Bindemittel derart zur Verfügung zu stellen, dass die Zahl solcher Gruppen im Polymer, unter guter Verfügbarkeit für die Aushärtungsreaktion, möglichst gering gehalten wird. Ein höherer Anteil polarer Gruppen im Bindemittel führt zu einer eventuellen Vergelung oder zumindest zu einer zusätzlichen Erhöhung der Schmelzviskosität des Reaktivschmelzklebstoffes.

Eine weitere Aufgabe ist es, ein solches Material mit einer möglichst engen Molekulargewichtsverteilung unter 1,8, bevorzugt unter 1,6 zur Verfügung zu stellen. Auf diese Weise werden sowohl die Anteile höhermolekularer Bestandteile, die u.a. zu einer ungewünschten Erhöhung der Schmelzviskosität beitragen, als auch die Anteile besonders niedermolekularer Bestandteile, die eine Verschlechterung der Lösungsmittelbeständigkeit der Klebemasse hervorrufen können, minimiert.

Aufgabe der vorliegenden Erfindung ist es daher, unter anderem ein Bindemittel zur Verfügung zu stellen, das über eine geringe Anzahl freier Hydroxygruppen in zwei Kettensegmenten A verfügt. In einer Ausführung liegt ein Pentablockcopolymer der Form ABCBA, das die OH-Gruppen in der Nähe der Kettenenden aufweist, vor. In einer zweiten Ausführung handelt es sich um Pentablockcopolymer der Form CABAC, das zwei OH-funktionalisierte Zwischensegmente A enthält.

### Lösung

Die Aufgabe wurde gelöst durch das zur Verfügung Stellen von Blockcopolymeren der Zusammensetzung CABAC oder ACBCA mit ≤8 OH-Gruppen, bevorzugt ≤4 OH-Gruppe in den einzelnen A-Blöcken, **dadurch gekennzeichnet, dass** Block A ein Copolymer enthaltend hydroyxfunktionalisierte (Meth)acrylate und Monomere ausgewählt aus der Gruppe der (Meth)acrylate oder deren Mischungen, und ein die Blöcke B und C, enthaltend (Meth)acrylate oder deren Mischungen, die keine Hydroxyfunktion aufweisen, als Pentablockcopolymerisate polymerisiert werden.

Dabei beschreibt B entweder einen harten (Meth)acrylat-, bevorzugt Methacrylatblock oder einen weichen (Meth)acrylat-, bevorzugt Acrylatblock. C beschreibt jeweils abweichend von B einen harten (Meth)acrylat-, bevorzugt Methacrylatblock oder einen weichen (Meth)acrylat-, bevorzugt Acrylatblock, wobei C einen harten Block darstellt, wenn es sich bei B um einen Weichblock handelt oder umgekehrt. Bei A handelt es sich um einen OH-funktionalisierten Block, wobei die Hydroxylgruppen durch Copolymerisation von OH-funktionalisierten mit nicht OH-funktionalisierten Monomeren in das Polymersegment eingebaut werden. Die Zusammensetzung der nicht OH-funktionalisierten Monomere kann dabei bevorzugt entweder der Zusammensetzung der Monomermischung, die zum Aufbau des B-Blocks verwendet wird, oder der Zusammensetzung der Monomermischung, die zum Aufbau des C-Blocks verwendet wird, entsprechen.

Die Formulierung Weichblock umschreibt Polymersegmente mit einer Glasübergangstemperatur T_{g}, die kleiner als 0 °C ist. Die Formulierung Hartblock beschreibt Polymersegmente mit einer Glasübergangstemperatur T_{g} größer 50 °C. Die Glasübergangstemperatur T_{g} wird mittels Differential Scanning Calorimetry (DSC) bestimmt.

Es wurde gefunden, dass auch ACBCA- bzw. CABAC-Blockcopolymere mit ≤2 OH-Gruppen in den einzelnen A-Blöcken dargestellt werden können.

Die Blockcopolymere der Zusammensetzung CABAC bzw. ACBCA bestehen zu weniger als 20% des Gesamtgewichtes, bevorzugt weniger als 10%, aus A-Blöcken.

Es können sowohl den Copolymeren des Blockes A, als auch den Copolymeren der Blöcke B bzw. C 0 Gew.-% - 50 Gew.-% mittels ATRP polymerisierbare Monomere, die nicht zu der Gruppe der (Meth)acrylate gezählt werden, zugegeben werden.

Die Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Zudem wurde ein Verfahren zur Herstellung von Blockcopolymeren der Zusammensetzung CABAC entwickelt. Mit einer speziellen Form der lebenden Polymerisation, der Atom Transfer Radical Polymerisation (ATPR), können gut kontrollierte Zusammensetzungen, Architekturen und definierte Funktionalitäten in ein Polymeres eingebaut werden.

Es wurde gefunden, dass durch den Einsatz eines bifunktionalen Initiators gezielt eine CABAC Struktur aufgebaut werden kann.

Hydroxyfunktionalisierte (Meth)acrylate die in Block A polymerisiert werden sind bevorzugt Hydroxyalkyl(meth)acrylate von gradkettigen, verzweigten oder cycloaliphatischen Diolen mit 2-36 C-Atomen, wie beispielsweise 3-Hydroxypropyl(meth)acrylat, 3,4-Dihydroxybutylmono(meth)acrylat, 2-Hydroxyethyl(meth)acrylat, 4-Hydroxybutyl(meth)acrylat, 2-Hydroxypropyl(meth)acrylat, 2,5-Dimethyl-1,6-hexandiolmono(meth)acrylat, besonders bevorzugt 2-Hydroxyethylmethacrylat.

Monomere die sowohl in Block A als auch in Block B bzw. C polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)methylether(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Das Verfahren kann in beliebigen halogenfreien Lösungsmitteln durchgeführt werden. Bevorzugt werden Toluol, Xylol, H₂O; Acetate, vorzugsweise Butylacetat, Ethylacetat, Propylacetat; Ketone, vorzugsweise Ethylmethylketon, Aceton; Ether; Aliphate, vorzugsweise Pentan, Hexan, aber auch Biodiesel.

Die Blockcopolymere der Zusammensetzung CABAC werden mittels sequentieller Polymerisation dargestellt.

Neben der Lösungspolymerisation kann die ATPR auch als Emulsions-, Miniemulsions-, Mikroemulsions-, Suspension- oder Substanzpolymerisation durchgeführt werden.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weißt das erfindungsgemäße Polymer ein zahlenmittleres Molekulargewicht zwischen 5.000 g/mol und 120.000 g/mol, besonders bevorzugt ≤ 50000 g/mol und ganz besonders bevorzugt zwischen 7.500 g/mol und 25.000 g/mol auf.

Es wurde gefunden, dass die Molekulargewichtsverteilung unter 1,8, bevorzugt unter 1,6, besonders bevorzugt unter 1,4 und idealerweise unter 1,3 liegt.

Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO₂R, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX₂-(CH₂)ₙ-CX₂-C₆H₅, C₆H₅-CX₂-(CH₂)ₙ-CX₂-C₆H₅, o,- m- bzw. p-XCH₂-Ph-CH₂X, o,- m- bzw. p-CH₃CHX-Ph-CHXCH₃, o,- m- bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m- bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder lod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) werden. Vorzugsweise werden 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrom-maleinsäure-di-ethylester verwendet. Aus dem Verhältnis Initiator zu Monomer ergibt sich das spätere Molekulargewicht, falls das gesamte Monomer umgesetzt wird.

Katalysatoren für ATPR sind in Chem.Rev. 2001, 101, 2921 aufgeführt. Es werden überwiegend Kupferkomplexe beschrieben - unter anderem kommen aber auch Eisen-, Rhodium-, Platin-, Ruthenium- oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, Cul, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu bifunktionellem Initiator liegt im Allgemeinen im Bereich von 0,02:1 bis 20:1, vorzugsweise im Bereich von 0,02:1 bis 6:1 und besonders bevorzugt im Bereich von 0,2:1 bis 4:1, ohne dass hierdurch eine Beschränkung erfolgen soll.

Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll.

Nach erfolgter ATRP kann die Übergangsmetallverbindung mittels Zugabe einer geeigneten Schwefelverbindung gefällt werden. Mittels Zugabe z.B. von Mercaptanen wird das kettenendständige Halogenatom unter Freisetzung eines Halogenwasserstoffs substituiert. Der Halogenwasserstoff - wie z.B. HBr- protoniert den am Übergangsmetall koordinierten Liganden L zu einem Ammoniumhalogenid. Durch diesen Vorgang wird der Übergangsmetall-Ligand Komplex gequencht und das "nackte" Metall ausgefällt. Anschließend lässt sich die Polymerlösung leicht durch eine einfache Filtration reinigen. Bei besagten Schwefelverbindungen handelt es sich bevorzugt um Verbindungen mit einer SH-Gruppe. Ganz besonders bevorzugt handelt es sich um einen aus der freiradikalischen Polymerisation bekannten Regler wie Mercaptoethanol, Ethylhexylmercaptan, n-Dodecylmercaptan oder Thioglycolsäure.

Aus den erfindungsgemäßen Copolymeren können beispielsweise Klebstoffe, Dichtmassen, Überzugsmittel oder Vergussmassen hergestellt werden. Durch die Verwendung der Copolymere kann Elastizität oder Festigkeit solcher Endprodukte verbessert werden. Weiterhin ist eine sehr gut Haftung auf verschiedenen Substraten zu beobachten.

Ein weiterer Vorteil der Blockcopolymere ist die Farblosigkeit sowie die Geruchlosigkeit des hergestellten Produkts.

Die erfindungsgemäßen OH-Gruppen tragenden Pentablockcopolymere können in dem Fachmann bekannten Folgeverfahren weiter umgesetzt werden. Beispielsweise können die OH-Gruppen dabei mit niedermolekularen Verbindungen umgesetzt werden, die zusätzlich zu einer mit OH -Gruppen reaktiven Gruppe, beispielsweise einer NCO-Gruppe, eine weitere funktionelle unter den Reaktionsbedingungen stabile Gruppe aufweisen. Solche funktionellen Gruppen sind beispielsweise Anhydridgruppen, Säuregruppen, Silylgruppen, Eopxidgruppen oder Isocyanatgruppen. Durch diesen zusätzlichen Verfahrensschritt ist es möglich Pentablockcopolymere mit anderen funktionellen Gruppen zu erhalten.

Somit ergibt sich ein breites Anwendungsfeld für diese Produkte. Die Auswahl der Anwendungsbeispiele ist nicht dazu geeignet die Verwendung der erfindungsgemäßen Polymere einzuschränken. Die Beispiele sollen einzig dazu dienen, stichprobenartig die breite Einsatzmöglichkeit der beschriebenen Polymere darzustellen. Bevorzugt werden Blockcopolymere der Zusammensetzung CABAC oder der Zusammensetzung ACBCA als Präpolymere in Reaktivschmelzklebstoffen, Schmelzklebstoffen, Beschichtungsmassen, Grundierungslacken, PSA (Pressure sensitive adhesives), Klebmassen oder Dichtmassen verwendet. Die Blockcopolymere der Zusammensetzung CABAC oder ACBCA können auch als Additiv Verwendung finden. Ein Beispiel dafür wäre eine Zugabe als Schlagzähmodifier in Kleb- oder Dichtstoffen. Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Das Zahlenmittel Mₙ bzw. das Gewichtsmittel M_{w} des Molekulargewichts und die Molekulargewichtsverteilung D werden mittels Gelpermeationschromatographie (GPC) gegen eine PMMA-Kalibrierung gemessen.

### Beispiele 1 - 2

In einem mit Rührer, Thermometer, Rückflusskühler, Stickstoffeinleitungsrohr und Tropftrichter ausgestatteten Doppelmantelgefäß wurden unter N₂-Atmosphäre Monomer I (genaue Bezeichnung und Mengenangabe in Tabelle 2), Butylacetat, 0,9 g Kupfer(I)oxid und 2,3 g PMDETA vorgelegt. Die Lösung wird für 15 min. bei 60 °C gerührt. Anschließend wird bei gleicher Temperatur in Butylacetat gelöster Initiator 1,4-Butandiol-di-(2-bromo-2-methylpropionat) (BDBIB) zugetropft. Nach der Polymerisationszeit von 3 Stunden wird eine Probe zur Bestimmung des mittleren Molgewichts Mₙ (mittels SEC) entnommen und Monomer II (genaue Bezeichnung und Mengenangabe in Tabelle 2) beigefügt. Nach einem errechneten 98%igen Umsatz wird schließlich eine weitere Probe für eine SEC-Messung entnommen und die Mischung aus Monomer III und Monomer F (genaue Bezeichnung und Mengenangabe in Tabelle 2) zugegeben. Die Mischung wird bis zu einem erwarteten Umsatz von mindestens 98% polymerisiert und darauf mittels ca. fünfminütigem Einleiten von Luftsauerstoff zum Abbruch gebracht. Anschließend werden 5 g n-Dodecylmercaptan zugegeben. Die zuvor grünliche Lösung färbt sich spontan rot und ein roter Niederschlag fällt aus. Die Filtration erfolgt mittels einer Überdruckfiltration. Die Lösung wird mit 50 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Das mittlere Molekulargewicht und die Molekulargewichtsverteilung werden abschließend durch SEC-Messungen bestimmt.

### Beispiele 3 - 4

In einem mit Rührer, Thermometer, Rückflusskühler, Stickstoffeinleitungsrohr und Tropftrichter ausgestatteten Doppelmantelgefäß wurden unter N₂-Atmosphäre Monomer I (genaue Bezeichnung und Mengenangabe in Tabelle 2), Butylacetat, 0,9 g Kupfer(I)oxid und 2,3 g PMDETA vorgelegt. Die Lösung wird für 15 min. bei 60 °C gerührt. Anschließend wird bei gleicher Temperatur in 10 mL Butylacetat gelöster Initiator 1,4-Butandiol-di-(2-bromo-2-methylpropionat) (BDBIB) zugetropft. Nach einer Polymerisationszeit von 3 Stunden wird eine Probe zur Bestimmung des mittleren Molgewichts Mₙ (mittels SEC) entnommen und eine Mischung aus Monomer II und Monomer F (genaue Bezeichnung und Mengenangabe in Tabelle 2) beigefügt. Nach einem errechneten 98%igen Umsatz wird schließlich eine weitere Probe für eine SEC-Messung entnommen und Monomer III (genaue Bezeichnung und Mengenangabe in Tabelle 2) zugegeben. Die Mischung wird bis zu einem erwarteten Umsatz von mindestens 98% polymerisiert und darauf mittels ca. fünfminütigem Einleiten von Luftsauerstoff zum Abbruch gebracht. Anschließend werden 5 g n-Dodecylmercaptan zugegeben. Die zuvor grünliche Lösung färbt sich spontan rot und ein roter Niederschlag fällt aus. Die Filtration erfolgt mittels einer Überdruckfiltration. Die Lösung wird mit 50 g Tonsil Optimum 210 FF (Fa. Südchemie) versetzt, 30 min gerührt und anschließend unter Überdruck über einen Aktivkohlefilter (AKS 5 der Fa. Pall Seitz Schenk) filtriert. Das mittlere Molekulargewicht und die Molekulargewichtsverteilung werden abschließend durch SEC-Messungen bestimmt.

**Tabelle 1**

| Beispiel | 1 | 2 | 3 | 4 |
|---|---|---|---|---|
| Monomer I | n-BA | MMA | n-BA | MMA |
| Menge | 41,02 g | 41,65 g | 41,80 g | 41,55 g |
| Monomer II | MMA | n-BA | MMA | MMA |
| Menge | 41,02 g | 41,65 g | 41,23 g | 41,37 g |
| Monomer III | MMA | n-BA | MMA | n-BA |
| Menge | 14,66 g | 14,88 g | 14,85 g | 14,85 g |
| Monomer F | HEMA | HEMA | HEMA | HEMA |
| Menge | 3,30 g | 3,25 g | 3,30 g | 3,30 g |
| Initiatormenge | 2,33 g | 2,55 g | 2,45 g | 2,48 g |
| Mₙ (1.Sufe) | 9300 | 8800 | 9100 | 8700 |
| Mₙ (2.Stufe) | 13300 | 15500 | 13600 | 15700 |
| Mₙ (Endprodukt) | 17900 | 18200 | 17200 | 17800 |
| D | 1,33 | 1,28 | 1,33 | 1,28 |

| | | | | |
|---|---|---|---|---|
| MMA= Methylmethacrylat; n-BA= n-Butylacrylat, HEMA= 2-Hydroxyethylmethacrylat | | | | |

## Patentansprüche

1. Verfahren zur Herstellung von mit OH-Gruppen funktionalisierten Pentablockcopolymere, **dadurch gekennzeichnet,**
**dass** genau zwei Blöcke, enthaltend hydroyxfunktionatisierte (Meth)acrylate und Monomere ausgewählt aus der Gruppe der nicht hydroxyfunktionalisierten (Meth)acrylate oder deren Mischungen und
genau drei Blöcke, enthaltend (Meth)acrylate oder deren Mischungen, die keine Hydroxyfunktion aufweisen und von denen sich zwei Blöcke wiederum in ihrer Zusammensetzung entsprechen und der dritte Block eine abweichende Zusammensetzung aufweist,
als Pentablockcopolymerisate dargestellt werden.

2. Verfahren zur Herstellung von mit OH-Gruppen funktionalisierten Pentablockcopolymere gemäß Anspruch 1, **dadurch gekennzeichnet,**
**dass** es sich bei dem Pentablockcopolymer um ein Blockcopolymer der Form CABAC handelt,
**dass** die Blöcke A aus hydroyxfunktionalisierten (Meth)acrylaten und Monomeren ausgewählt aus der Gruppe der nicht hydroxyfunktionalisierten (Meth)acrylate oder deren Mischungen zusammengesetzt sind, und
**dass** die Blöcke B und C aus (Meth)acrylaten oder deren Mischungen, die keine Hydroxyfunktion enthalten, zusammengesetzt sind.

3. Verfahren zur Herstellung von mit OH-Gruppen funktionalisierten Pentablockcopolymere gemäß Anspruch 2, **dadurch gekennzeichnet, dass** die einzelnen A-Blöcke der CABAC-Blockcopolymere eine Zusammensetzung mit ≤ 2 OH-Gruppen aufweisen.

4. Verfahren zur Herstellung von mit OH-Gruppen funktionalisierten Pentablockcopolymere gemäß Anspruch 2, **dadurch gekennzeichnet, dass** die einzelnen A-Blöcke weniger als 20%, bevorzugt weniger als 10% des Gesamtgewichts des CABAC-Blockcopolymers ausmachen.

5. Verfahren zur Herstellung von mit OH-Gruppen funktionalisierten Pentablockcopolymere gemäß Anspruch 1, **dadurch gekennzeichnet,**
**dass** es sich bei dem Pentablockcopolymer um ein Blockcopolymer der Form ACBCA handelt,
**dass** die Blöcke A aus hydroyxfunktionalisierten (Meth)acrylaten und Monomeren ausgewählt aus der Gruppe der nicht hydroxyfunktionalisierten (Meth)acrylate oder deren Mischungen zusammengesetzt sind, und
**dass** die Blöcke B und C aus (Meth)acrylaten oder deren Mischungen, die keine Hydroxyfunktion enthalten, zusammengesetzt sind.

6. Verfahren zur Herstellung von mit OH-Gruppen funktionalisierten Pentablockcopolymere gemäß Anspruch 2 oder 5, **dadurch gekennzeichnet, dass** die Zusammensetzung des nicht OH-funktionalisierten Anteils in den A-Blöcken der Zusammensetzung der C-Blöcke entspricht, oder dass die Zusammensetzung des nicht OH-funktionalisierten Anteils in den A-Blöcken der Zusammensetzung der B-Blöcke entspricht.

7. Verfahren zur Herstellung von mit OH-Gruppen funktionalisierten Pentablockcopolymere gemäß Anspruch 2 oder 5, **dadurch gekennzeichnet, dass** die Glasübergangstemperatur des B-Blockes größer 50 °C und die Glasübergangstemperatur der C-Blöcke kleiner 0 °C ist.

8. Verfahren zur Herstellung von mit OH-Gruppen funktionalisierten Pentablockcopolymere gemäß Anspruch 2 oder 5, **dadurch gekennzeichnet, dass** die Glasübergangstemperatur der C-Blöcke größer 50 °C und die Glasübergangstemperatur der B-Blocks kleiner 0 °C ist.

9. Verfahren zur Herstellung von mit OH-Gruppen funktionalisierten Pentablockcopolymere gemäß Anspruch 2 oder 5, **dadurch gekennzeichnet, dass** die einzelnen A-Blöcke der CABAC- oder der ACBCA-Blockcopolymere eine Zusammensetzung mit ≤ 2 OH-Gruppen aufweisen.

10. Verfahren zur Herstellung von mit OH-Gruppen funktionalisierten Pentablockcopolymere gemäß Anspruch 2 oder 5, **dadurch gekennzeichnet, dass** die einzelnen A-Blöcke weniger als 20%, bevorzugt weniger als 10% des Gesamtgewichts der CABAC- oder der ACBCA-Blockcopolymere ausmachen.

11. Verfahren zur Herstellung von mit OH-Gruppen funktionalisierten Pentablockcopolymere gemäß Anspruch 1, **dadurch gekennzeichnet, dass** die Blockcopolymere mittels ATRP polymerisierbare Monomere, die nicht zu der Gruppe der (Meth)acrylate gezählt werden, in den Blöcken A und/oder Block B und/oder den Blöcken C enthalten.

12. Verfahren zur Herstellung von mit OH-Gruppen funktionalisierten Pentablockcopolymere gemäß Anspruch 1, **dadurch gekennzeichnet, dass** die hydroxyfunktionalisierten (Meth)acrylate bevorzugt ausgewählt sind aus der Gruppe Hydroxyalkyl(meth)acrylate von gradkettigen, verzweigten oder cycloaliphatischen Diolen mit 2-36 C-Atomen, wie beispielsweise 3-Hydroxypropyl(meth)acrylat, 3,4-Dihydroxybutylmono(meth)acrylat, 4-Hydroxybutyl(meth)acrylat, 2-Hydroxypropyl(meth)acrylat, 2,5-Dimethyl-1,6-hexandiolmono(meth)acrylat, Hydroxyethylacrylat und besonders bevorzugt 2-Hydroxyethylmethacrylat.

13. Verfahren zur Herstellung von mit OH-Gruppen funktionalisierten Pentablockcopolymere gemäß Anspruch 1, **dadurch gekennzeichnet, dass** die Pentablockcopolymere mittels sequentieller Atom Transfer Radical Polymerization (ATRP) in Anwesenheit eines bifunktionellen Initiators und eines Katalysators in einem halogenfreien Lösungsmittel dargestellt werden, und als bifunktioneller Initiator bevorzugt 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrom-maleinsäure-di-ethylester eingesetzt wird.

14. Verfahren zur Herstellung von Pentablockcopolymeren gemäß Anspruch 13, **dadurch gekennzeichnet, dass** das Blockcopolymer ein zahlenmittleres Molekulargewicht zwischen 5000 g/mol und 100000 g/mol, bevorzugt zwischen 7500 g/mol und 50000 g/mol aufweist.

15. Verfahren zur Herstellung von Pentablockcopolymeren gemäß Anspruch 13, **dadurch gekennzeichnet, dass** der Katalysator nach der Polymerisation mittels Zugabe einer Schwefelverbindung gefällt und mittels Filtration von der Polymerlösung abgetrennt wird, und dass es sich bei der Schwefelverbindung um ein Mercaptan oder eine eine Thiolgruppe aufweisende Verbindung handelt.

16. Verfahren nach Anspruch 1 bis 15 **dadurch gekennzeichnet, dass** die OH-Gruppen des Polymeren mit niedermolekularen Verbindungen umgesetzt werden, die zusätzlich zu einer mit OH-Gruppen reaktiven Gruppe eine Anhydrid-, Säure-, Isocyanat-, Epoxid- oder Silylgruppe aufweisen.

17. Mit OH-Gruppen funktionalisierte Pentablockcopolymere, die gemäß des in Anspruch 1 beschriebenen Verfahren erhältlich sind, **dadurch gekennzeichnet, dass** diese aus genau zwei Blöcken, enthaltend hydroyxfunktionalisierte (Meth)acrylate und Monomere ausgewählt aus der Gruppe der nicht hydroxyfunktionalisierten (Meth)acrylate oder deren Mischungen und
genau drei Blöcken, enthaltend (Meth)acrylate oder deren Mischungen, die keine Hydroxyfunktion aufweisen und von denen sich zwei Blöcke wiederum in ihrer Zusammensetzung entsprechen und der dritte Block eine abweichende Zusammensetzung aufweist,
zusammengesetzt sind.

18. Mit OH-Gruppen funktionalisierte Pentablockcopolymere, die gemäß des in Anspruch 2 beschriebenen Verfahren erhältlich sind, **dadurch gekennzeichnet,**
**dass** es sich bei dem Pentablockcopolymer um ein Blockcopolymer der Form CABAC handelt,
**dass** die Blöcke A aus hydroyxfunktionalisierten (Meth)acrylaten und Monomeren ausgewählt aus der Gruppe der nicht hydroxyfunktionalisierten (Meth)acrylate oder deren Mischungen zusammengesetzt sind, und
**dass** die Blöcke B und C aus (Meth)acrylaten oder deren Mischungen, die keine Hydroxyfunktion enthalten, zusammengesetzt sind.

19. Mit OH-Gruppen funktionalisierte Pentablockcopolymere, die gemäß des in Anspruch 5 beschriebenen Verfahren erhältlich sind, **dadurch gekennzeichnet,**
**dass** es sich bei dem Pentablockcopolymer um ein Blockcopolymer der Form ACBCA handelt,
**dass** die Blöcke A aus hydroyxfunktionalisierten (Meth)acrylaten und Monomeren ausgewählt aus der Gruppe der nicht hydroxyfunktionalisierten (Meth)acrylate oder deren Mischungen zusammengesetzt sind, und
**dass** die Blöcke B und C aus (Meth)acrylaten oder deren Mischungen, die keine Hydroxyfunktion enthalten, zusammengesetzt sind.

20. Verwendung von Blockcopolymeren gemäß einem der Ansprüche 17 bis 19 in Reaktivschmelzklebstoffen, Schmetzklebstoffen, Beschichtungsmassen, Grundierungslacken, Haftklebstoffe, Reaktivklebstoffe, Klebmassen, Dichtmassen oder als Schlagzähmodifier in Kleb- oder Dichtmassen.

## Claims

1. Process for preparing pentablock copolymers functionalized with OH groups, **characterized in that** exactly two blocks containing hydroxy-functionalized (meth)acrylates and monomers selected from the group of the non-hydroxy-functionalized (meth)acrylates or mixtures thereof and
exactly three blocks containing (meth)acrylates or mixtures thereof, which have no hydroxyl function and among which two blocks in turn are of corresponding composition and the third block has a different composition,
are prepared as pentablock copolymers.

2. Process for preparing pentablock copolymers functionalized with OH groups according to Claim 1, **characterized in that**
the pentablock copolymer is a block copolymer of the CABAC form,
the A blocks are composed of hydroxy-functionalized (meth)acrylates and monomers selected from the group of the non-hydroxy-functionalized (meth)acrylates or mixtures thereof, and
blocks B and C are composed of (meth)acrylates or mixtures thereof, which have no hydroxyl function.

3. Process for preparing pentablock copolymers functionalized with OH groups according to Claim 2, **characterized in that** the individual A blocks of the CABAC block copolymers have a composition with ≤ 2 OH groups.

4. Process for preparing pentablock copolymers functionalized with OH groups according to Claim 2, **characterized in that** the individual A blocks make up less than 20%, preferably less than 10% of the total weight of the CABAC block copolymer.

5. Process for preparing pentablock copolymers functionalized with OH groups according to Claim 1, **characterized in that**
the pentablock copolymer is a block copolymer of the ACBCA form,
the A blocks are composed of hydroxy-functionalized (meth)acrylates and monomers selected from the group of the non-hydroxy-functionalized (meth)acrylates or mixtures thereof, and
blocks B and C are composed of (meth)acrylates or mixtures thereof, which have no hydroxyl function.

6. Process for preparing pentablock copolymers functionalized with OH groups according to Claim 2 or 5, **characterized in that** the composition of the non-OH-functionalized fraction in the A blocks corresponds to the composition of the C blocks, or **in that** the composition of the non-OH-functionalized fraction in the A blocks corresponds to the composition of the B blocks.

7. Process for preparing pentablock copolymers functionalized with OH groups according to Claim 2 or 5, **characterized in that** the glass transition temperature of the B block is greater than 50°C and the glass transition temperature of the C blocks is less than 0°C.

8. Process for preparing pentablock copolymers functionalized with OH groups according to Claim 2 or 5, **characterized in that** the glass transition temperature of the C blocks is greater than 50°C and the glass transition temperature of the B block is less than 0°C.

9. Process for preparing pentablock copolymers functionalized with OH groups according to Claim 2 or 5, **characterized in that** the individual A blocks of the CABAC or of the ACBCA block copolymers have a composition with ≤ 2 OH groups.

10. Process for preparing pentablock copolymers functionalized with OH groups according to Claim 2 or 5, **characterized in that** the individual A blocks make up less than 20%, preferably less than 10% of the total weight of the CABAC or of the ACBCA block copolymers.

11. Process for preparing pentablock copolymers functionalized with OH groups according to Claim 1, **characterized in that** the block copolymers contain monomers which are polymerizable by means of ATRP and do not form part of the group of the (meth)acrylates, in the A blocks and/or B block and/or C blocks.

12. Process for preparing pentablock copolymers functionalized with OH groups according to Claim 1, **characterized in that** the hydroxy-functionalized (meth)acrylates are preferably selected from the group of hydroxyalkyl (meth)acrylates of straight-chain, branched or cycloaliphatic diols having 2-36 carbon atoms, for example 3-hydroxypropyl (meth)acrylate, 3,4-dihydroxybutyl mono(meth)acrylate, 4-hydroxybutyl (meth)acrylate, 2-hydroxypropyl (meth)acrylate, 2,5-dimethyl-1,6-hexanediol mono(meth)acrylate, hydroxyethyl acrylate and more preferably 2-hydroxyethyl methacrylate.

13. Process for preparing pentablock copolymers functionalized with OH groups according to Claim 1, **characterized in that** the pentablock copolymers are prepared by means of sequential atom transfer radical polymerization (ATRP) in the presence of a bifunctional initiator and of a catalyst in a halogen-free solvent, and the bifunctional initiator used is preferably 1,4-butanediol di(2-bromo-2-methylpropionate), 1,2-ethylene glycol di(2-bromo-2-methylpropionate), diethyl 2,5-dibromoadipate or diethyl 2,3-dibromomaleate.

14. Process for preparing pentablock copolymers according to Claim 13, **characterized in that** the block copolymer has a number-average molecular weight between 5000 g/mol and 100 000 g/mol, preferably between 7500 g/mol and 50 000 g/mol.

15. Process for preparing pentablock copolymers according to Claim 13, **characterized in that** the catalyst, after the polymerization, is precipitated by means of addition of a sulphur compound and removed from the polymer solution by means of filtration, and **in that** the sulphur compound is a mercaptan or a compound having a thiol group.

16. Process according to Claim 1 to 15, **characterized in that** the OH groups of the polymer are reacted with low molecular weight compounds which, in addition to a group reactive with OH groups, have an anhydride, acid, isocyanate, epoxide or silyl group.

17. Pentablock copolymers functionalized with OH groups which are obtainable by the process described in Claim 1, **characterized in that** they are composed of exactly two blocks containing hydroxy-functionalized (meth)acrylates and monomers selected from the group of the non-hydroxy-functionalized (meth)acrylates or mixtures thereof and
exactly three blocks containing (meth)acrylates or mixtures thereof, which have no hydroxyl function and among which two blocks in turn are of corresponding composition and the third block has a different composition.

18. Pentablock copolymers functionalized with OH groups which are obtainable by the process described in Claim 2, **characterized in that**
the pentablock copolymer is a block copolymer of the CABAC form,
the A blocks are composed of hydroxy-functionalized (meth)acrylates and monomers selected from the group of the non-hydroxy-functionalized (meth)acrylates or mixtures thereof, and
blocks B and C are composed of (meth)acrylates, or mixtures thereof, which have no hydroxyl function.

19. Pentablock copolymers functionalized with OH groups which are obtainable by the process described in Claim 5, **characterized in that**
the pentablock copolymer is a block copolymer of the ACBCA form,
the A blocks are composed of hydroxy-functionalized (meth)acrylates and monomers selected from the group of the non-hydroxy-functionalized (meth)acrylates or mixtures thereof, and
blocks B and C are composed of (meth)acrylates, or mixtures thereof, which have no hydroxyl function.

20. Use of block copolymers according to one of Claims 17 to 19 in reactive hotmelt adhesives, other hotmelt adhesives, coating materials, primer coats, pressure-sensitive adhesives, reactive adhesives, adhesive compositions, sealant compositions, or as impact modifiers in adhesive or sealant compositions.

## Revendications

1. Procédé pour la préparation de copolymères à cinq blocs, fonctionnalisés avec des groupes OH, **caractérisé**
**en ce qu'**exactement deux blocs contenant des (méth)acrylates fonctionnalisés par hydroxy et des monomères choisis dans le groupe des (méth)acrylates non fonctionnalisés par hydroxy ou leurs mélanges et exactement trois blocs, contenant des (méth)acrylates ou leurs mélanges, qui ne présentent pas de fonction hydroxy et dont deux blocs se correspondent à nouveau en ce qui concerne leur composition et le troisième bloc présente une composition différente,
sont préparés sous forme de copolymères à cinq blocs.

2. Procédé pour la préparation de copolymères à cinq blocs, fonctionnalisés avec des groupes OH selon la revendication 1, **caractérisé en ce qu'**il s'agit, pour les copolymères à cinq blocs, d'un copolymère à blocs de forme CABAC,
**en ce que** les blocs A sont constitués par des (méth)acrylates fonctionnalisés par hydroxy et des monomères choisis dans le groupe des (méth)acrylates non fonctionnalisés par hydroxy ou leurs mélanges, et
**en ce que** les blocs B et C sont constitués par des (méth)acrylates ou leurs mélanges qui ne contiennent pas de fonction hydroxy.

3. Procédé pour la préparation de copolymères à cinq blocs, fonctionnalisés avec des groupes OH selon la revendication 2, **caractérisé en ce que** les blocs A individuels des copolymères à blocs CABAC présentent une composition comprenant ≤ 2 OH.

4. Procédé pour la préparation de copolymères à cinq blocs, fonctionnalisés avec des groupes OH selon la revendication 2, **caractérisé en ce que** les blocs A individuels représentent moins de 20%, de préférence moins de 10% du poids total du copolymère à blocs CABAC.

5. Procédé pour la préparation de copolymères à cinq blocs, fonctionnalisés avec des groupes OH selon la revendication 1, **caractérisé**
**en ce qu'**il s'agit, pour les copolymères à cinq blocs, d'un copolymère à blocs de forme ACBCA,
**en ce que** les blocs A sont constitués par des (méth)acrylates fonctionnalisés par hydroxy et des monomères choisis dans le groupe des (méth)acrylates non fonctionnalisés par hydroxy ou leurs mélanges, et
**en ce que** les blocs B et C sont constitués par des (méth)acrylates ou leurs mélanges qui ne contiennent pas de fonction hydroxy.

6. Procédé pour la préparation de copolymères à cinq blocs, fonctionnalisés avec des groupes OH selon la revendication 2 ou 5, **caractérisé en ce que** la composition de la proportion non fonctionnalisée par OH dans les blocs A correspond à la composition des blocs C ou **en ce que** la composition de la proportion non fonctionnalisée par OH dans les blocs A correspond à la composition des blocs B.

7. Procédé pour la préparation de copolymères à cinq blocs, fonctionnalisés avec des groupes OH selon la revendication 2 ou 5, **caractérisé en ce que** la température de transition vitreuse du bloc B est supérieure à 50°C et la température de transition vitreuse des blocs C est inférieure à 0°C.

8. Procédé pour la préparation de copolymères à cinq blocs, fonctionnalisés avec des groupes OH selon la revendication 2 ou 5, **caractérisé en ce que** la température de transition vitreuse des blocs C est supérieure à 50°C et la température de transition vitreuse du bloc B est inférieure à 0°C.

9. Procédé pour la préparation de copolymères à cinq blocs, fonctionnalisés avec des groupes OH selon la revendication 2 ou 5, **caractérisé en ce que** les blocs A individuels des copolymères à blocs CABAC ou ACBCA présentent une composition comprenant ≤ 2 OH.

10. Procédé pour la préparation de copolymères à cinq blocs, fonctionnalisés avec des groupes OH selon la revendication 2 ou 5, **caractérisé en ce que** les blocs A individuels représentent moins de 20%, de préférence moins de 10% du poids total des copolymères à blocs CABAC ou ACBCA.

11. Procédé pour la préparation de copolymères à cinq blocs, fonctionnalisés avec des groupes OH selon la revendication 1, **caractérisé en ce que** les copolymères à blocs contiennent, dans les blocs A et/ou dans le bloc B et/ou dans les blocs C, des monomères polymérisables au moyen d'ATRP qui ne sont pas comptés dans le groupe des (méth)acrylates.

12. Procédé pour la préparation de copolymères à cinq blocs, fonctionnalisés avec des groupes OH selon la revendication 1, **caractérisé en ce que** les (méth)acrylates fonctionnalisés par hydroxy sont de préférence choisis dans le groupe des (méth)acrylates d'hydroxyalkyle de diols linéaires, ramifiés ou cycloaliphatiques comprenant 2-36 atomes de carbone, tels que par exemple le (méth)acrylate de 3-hydroxypropyle, le mono(méth)acrylate de 3,4-dihydroxybutyle, le (méth)acrylate de 4-hydroxybutyle, le (méth)acrylate de 2-hydroxypropyle, le mono(méth)acrylate de 2,5-diméthyl-1,6-hexanediol, l'acrylate d'hydroxyéthyle et de manière particulièrement préférée le méthacrylate de 2-hydroxyéthyle.

13. Procédé pour la préparation de copolymères à cinq blocs, fonctionnalisés avec des groupes OH selon la revendication 1, **caractérisé en ce que** les copolymères à cinq blocs sont préparés par polymérisation séquentielle radicalaire par transfert d'atomes (ATRP - Atom Transfer Radical Polymerization) en présence d'un initiateur difonctionnel et d'un catalyseur dans un solvant exempt d'halogène, et on utilise comme initiateur difonctionnel de préférence le di-(2-bromo-2-méthylpropionate) de 1,4-butanediol, le di-(2-bromo-2-méthylpropionate) de 1,2-éthylèneglycol, l'ester diéthylique de l'acide 2,5-dibromoadipique ou l'ester diéthylique de l'acide 2,3-dibromomaléique.

14. Procédé pour la préparation de copolymères à cinq blocs selon la revendication 13, **caractérisé en ce que** le copolymère à blocs présente un poids moléculaire numérique moyen entre 5000 g/mole et 100 000 g/mole, de préférence entre 7500 g/mole et 50 000 g/mole.

15. Procédé pour la préparation de copolymères à cinq blocs selon la revendication 13, **caractérisé en ce que** le catalyseur est précipité après la polymérisation par addition d'un composé soufré et séparé par filtration de la solution de polymère et **en ce qu'**il s'agit, pour le composé soufré, d'un mercaptan ou d'un composé présentant un groupe thiol.

16. Procédé selon la revendication 1 à 15, **caractérisé en ce que** les groupes OH du polymère sont transformés avec des composés de bas poids moléculaire qui présentent, en plus d'un groupe réactif avec des groupes OH, un groupe anhydride, acide, isocyanate, époxyde ou silyle.

17. Copolymères à cinq blocs, fonctionnalisés avec des groupes OH, qui peuvent être obtenus selon le procédé décrit dans la revendication 1, **caractérisés en ce qu'**ils sont constitués par exactement deux blocs contenant des (méth)acrylates fonctionnalisés par hydroxy et des monomères choisis dans le groupe des (méth)acrylates non fonctionnalisés par hydroxy ou leurs mélanges et
exactement trois blocs, contenant des (méth)acrylates ou leurs mélanges, qui ne présentent pas de fonction hydroxy et dont deux blocs se correspondent à nouveau en ce qui concerne leur composition et le troisième bloc présente une composition différente.

18. Copolymères à cinq blocs, fonctionnalisés avec des groupes OH, qui peuvent être obtenus selon le procédé décrit dans la revendication 2, **caractérisés en ce qu'**il s'agit, pour les copolymères à cinq blocs, d'un copolymère à blocs de forme CABAC,
**en ce que** les blocs A sont constitués par des (méth)acrylates fonctionnalisés par hydroxy et des monomères choisis dans le groupe des (méth)acrylates non fonctionnalisés par hydroxy ou leurs mélanges, et **en ce que** les blocs B et C sont constitués par des (méth)acrylates ou leurs mélanges qui ne contiennent pas de fonction hydroxy.

19. Copolymères à cinq blocs, fonctionnalisés avec des groupes OH, qui peuvent être obtenus selon le procédé décrit dans la revendication 5, **caractérisés en ce qu'**il s'agit, pour les copolymères à cinq blocs, d'un copolymère à blocs de forme ACBCA,
**en ce que** les blocs A sont constitués par des (méth)acrylates fonctionnalisés par hydroxy et des monomères choisis dans le groupe des (méth)acrylates non fonctionnalisés par hydroxy ou leurs mélanges, et **en ce que** les blocs B et C sont constitués par des (méth)acrylates ou leurs mélanges qui ne contiennent pas de fonction hydroxy.

20. Utilisation de copolymères à blocs selon l'une quelconque des revendications 17 à 19 dans des adhésifs réactifs en masse, des adhésifs en masse fondue, des masses de revêtement, des laques d'apprêt, des autoadhésifs, des adhésifs réactifs, des masses adhésives, des masses d'étanchéité ou comme agents de modification de la résilience dans des masses adhésives ou des masses d'étanchéité.
